# EUROPÄISCHE PATENTSCHRIFT

(11) **EP 1 116 905 B1**
(45) Veröffentlichungstag und Bekanntmachung des Hinweises auf die Patenterteilung: **22.06.2005**
(21) Anmeldenummer: 00125754.2
(22) Anmeldetag: 24.11.2000
(51) Int. Cl.: F16J 15/32

(54) **Dichtungsanordnung**
Sealing arrangement
Dispositif d'étanchéité

(30) Priorität: 12.01.2000 DE 10000853
(43) Veröffentlichungstag der Anmeldung: 18.07.2001
(73) Patentinhaber: Carl Freudenberg KG, 69469 Weinheim (DE)
(72) Erfinder: Fougerolle, Fabrice, 52600 Montlandon (FR)

(56) Entgegenhaltungen:
- DE-A- 19 532 701
- DE-A- 19 539 057

## Beschreibung

### Technisches Gebiet

Die Erfindung betrifft eine Dichtungsanordnung, umfassend einen Dichtring mit im Einbauzustand einer in Richtung eines abzudichtenden Raums vorgewölbten Dichtlippe, die ein abzudichtendes Maschinenelement umfangsseitig mit Vorspannung dichtend umschließt.

### Stand der Technik

Eine derartige Dichtungsanordnung ist allgemein bekannt, beispielsweise aus der DE 195 32 701 A1. Ein Lippendichtring für ein relativ bewegbares Maschinenelement umfaßt eine flexible Dichtlippe aus polymerem Werkstoff, die auf der dem abzudichtenden Maschinenelement zugewandten Seite einen Rückförderdrall aufweist. Der Rückförderdrall ist vertieft in die Dichtlippe eingebracht. Der Rückförderdrall ist an einer Stelle unterbrochen, wobei der Rückförderdrall mit Wachs verschlossen ist. Zur Detektierung der Dichtheit des Aggregats wird der abzudichtende Raum mit einem Überdruck beaufschlagt, wobei durch den mit Wachs gefüllten Rückförderdrall während der Durchführung der Druckprüfung keine Druckluft mehr entweichen kann. Fehlerhaft montierte Dichtringe, bei denen die Dichtlippe statt in Richtung des abzudichtenden Raums fehlerhaft in Richtung der Umgebung vorgewölbt ist, lassen sich demgegenüber durch die vorbekannte Dichtungsanordnung nicht ermitteln.

Dichtringe werden in vielen Fällen unter Verwendung von automatischen Montageeinrichtungen montiert. Dabei kann es vorkommen, daß sich die Dichtlippe durch unvorhersehbare Einflüsse umstülpt und im Bereich ihres Innenumfangs nicht in Richtung des abzudichtenden Raums zeigt, wie vorgeschrieben, sondern in Richtung der Umgebung. Auf diese Weise läßt sich kein befriedigendes Abdichtungsergebnis während des Gebrauchs erzielen. Es ist daher erforderlichen, jeden einzelnen Dichtring im Anschluß an seine Montage daraufhin zu überprüfen, ob die Dichtlippe in Richtung des abzudichtenden Raums zeigt oder nicht. Insbesondere in Einbaupositionen, in denen die Einbaustelle schwer einzusehen ist, ist das auf manuellem Wege schwierig. Es ist daher nötig, den abzudichtenden Raum im Anschluß an die Montage aller dichtenden Maschinenelemente mit Druckluft eines vorgegebenen Kontrolldrucks zu füllen und den Druckabfall während einer bestimmten Zeitspanne zu beobachten. Ergibt sich ein schneller Druckabfall, so ist das ein sicheres Zeichen dafür, daß bei einem der dichtenden Maschinenelemente ein Montagefehler vorliegt. Eine Dichtungsanordnung nach der DE 195 32 701 A1 hat eine Dichtlippe, die auf der dem abzudichtenden Maschinenelement abgewandten Seite glatt ist. Sind solche Teile fehlerhaft montiert und in Richtung der Umgebung vorgewölbt, entsteht kein Druckabfall, der zur Detektierung des Fehlers notwendig wäre.

Aus der DE 195 39 057 A1 ist ein Radialwellendichtring bekannt, mit einem Stützring und einer sich im Wesentlichen in radialer Richtung erstreckenden, kreisringförmigen Dichtscheibe aus elastisch deformierbarem Werkstoff, wobei der Stützring und die Dichtscheibe miteinander verbunden sind, wobei die Dichtscheibe radial innenseitig in Richtung eines abzudichtenden Raums vorwölbbar ist und in axialer Richtung einerseits auf der dem abzudichtenden Raum abgewandten Seite zur Rückförderung von Leckflüssigkeit in den abzudichtenden Raum bei Rotation der abzudichtenden Welle in einer ersten Drehrichtung mit einer ersten Oberflächenprofilierung versehen ist, die unter radialer Vorspannung dichtend an die Welle anlegbar ist. Die Dichtscheibe ist in axialer Richtung andererseits, auf der der ersten Oberflächenprofilierung abgewandten Seite zur Rückförderung von Leckflüssigkeit in den abzudichtenden Raum bei Rotation der Welle in einer der ersten Drehrichtung entgegen gerichteten zweiten Drehrichtung mit einer zweiten Oberflächenprofilierung versehen, wobei die Dichtscheibe radial innenseitig in axialer Richtung beiderseits vorwölbbar ist und wobei die zweite Oberflächenprofilierung unter radialer Vorspannung dichtend an die Welle anlegbar ist. Beide Oberflächenprofilierungen sind als Rückfördereinrichtungen für abzudichtendes Medium in Richtung des abzudichtenden Raums ausgebildet und sind beispielsweise durch umfangsseitig umlaufende schraubengangförmige und nutförmige Ausnehmungen gebildet. Die Dichtlippe weist im Einbauzustand auf der dem Maschinenelement radial abgewandten Seite demnach zumindest eine Ausnehmung auf.

### Darstellung der Erfindung

Der Erfindung liegt die Aufgabe zugrunde, eine Dichtungsanordnung der eingangs genannten Art derart weiterzuentwickeln, daß eine fehlerhaft in Richtung der Umgebung vorgewölbte Dichtlippe nach dem Einbau unter Verwendung einer Druckprüfung sicher erkannt werden kann.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, daß im Einbauzustand die Dichtlippe auf der dem Maschinenelement radial abgewandten Seite zumindest eine Ausnehmung aufweist, die, nur bei fehlerhafter Montage des Dichtrings und Vorwölbung der Dichtlippe in Richtung der Umgebung, den abzudichtenden Raum mit der Umgebung strömungsleitend verbindet. In korrekter Einbaulage ist die Dichtlippe axial in Richtung des abzudichtenden Raums gewölbt, wobei die Ausnehmung dann ohne Wirkung ist. Die Ausnehmung mündet zwar axial einerseits in den abzudichtenden Raum, nicht jedoch in die Umgebung.

Hat sich die Dichtlippe demgegenüber während der Montage umgestülpt und weist in Richtung der Umgebung, berührt die Oberfläche der Dichtlippe, in der die Ausnehmung angeordnet ist, die Oberfläche des abzudichtenden Maschinenelements und verbindet den abzudichtenden Raum strömungsleitend mit der Umgebung. In einem statischen Luftdichtheitstest, auch Kalttest genannt, entweicht die in den abzudichtenden Raum eingespeiste Druckluft durch die Ausnehmung in die Umgebung und der ungewöhnlich rasche Druckabfall signalisiert die fehlerhafte Montage des Dichtrings mit der in Richtung der Umgebung umgestülpten Dichtlippe.

Nach Erkennen des Fehlers wird der fehlerhaft eingebaute Dichtring entfernt und durch einen neuen, korrekt eingebauten Dichtring ersetzt.

Ohne die Ausnehmung, die den abzudichtenden Raum und die Umgebung bei fehlerhafter Vorwölbung der Dichtlippe in Richtung der Umgebung verbindet, wäre der Druck innerhalb des abzudichtenden Raums bei dem statischen Luftdichtheitstest im wesentlichen konstant geblieben, der Fehler wäre nicht erkannt worden.

Unabhängig davon, ob die Dichtlippe in Richtung des abzudichtenden Raums oder in Richtung der Umgebung vorgewölbt ist, erstreckt sich die Ausnehmung im wesentlichen in axialer Richtung.

Die Ausnehmung kann als leitungsförmiger Kanal ausgebildet sein. Der Kanalquerschnitt sollte bevorzugt derart bemessen sein, daß der Strömungswiderstand möglichst gering ist, so daß beim statischen Luftdichtheitstest unmittelbar nach Druckbeaufschlagung des abzudichtenden Raums sofort und klar erkennbar ist, daß die Dichtlippe fehlerhaft in Richtung der Umgebung vorgewölbt ist.

Im Hinblick auf einen möglichst geringen Strömungswiderstand und einen raschen Druckabbau bei fehlerhaft in Richtung zur Umgebung hin vorgewölbter Dichtlippe ist von Vorteil, wenn zumindest zwei Ausnehmungen vorgesehen sind, die bevorzugt gleichmäßig in Umfangsrichtung verteilt angeordnet sind. Davon abweichend besteht die Möglichkeit, beispielsweise acht gleichmäßig in Umfangsrichtung verteilte Ausnehmungen vorzusehen. Eine möglichst große Anzahl von Ausnehmungen ist insbesondere dann sinnvoll, wenn der Dichtring nur geringe Abmessungen aufweist und deshalb in radialer Richtung tiefe Ausnehmungen nur schlecht zu verwirklichen sind.

Die Dichtlippe kann aus einem polymeren Werkstoff bestehen, beispielsweise aus PTFE. Hierbei ist von Vorteil, daß PTFE nach einem sehr geringen Anfangsverschleiß glasiert und dadurch trotz seiner Elastizität und guter Dichtwirkung eine große Härte und Verschleißfestigkeit aufweist.

Die Dichtlippe kann im Einbauzustand auf der dem Maschinenelement radial zugewandten Seite einen Rückförderdrall für das abzudichtende Medium aufweisen. Bei korrekter Einbaulage der Dichtlippe wird das abzudichtende Maschinenelement, beispielsweise eine Welle, von einem schraubengangförmigen Rückförderdrall umschlossen. Während der bestimmungsgemäßen Verwendung des Dichtrings wird das abzudichtende Medium, das sich innerhalb des Dichtspalts unter der Dichtlippe befindet, durch den Rückförderdrall wieder zurück in den abzudichtenden Raum gefördert.

Da auch ein schraubengangförmiger Rückförderdrall den abzudichtenden Raum mit der Umgebung verbindet, jedoch im Gegensatz zu der Ausnehmung nur von kapillaraktiver Enge ist, erfolgt ein Druckabfall bei fehlerhaft in Richtung der Umgebung vorgewölbter Dichtlippe wesentlich schneller als bei korrekt montierter Dichtlippe. Durch den sehr unterschiedlichen Druckabfall über der Zeit kann auch bei Ausgestaltungen der Dichtlippe mit Rückförderdrall eindeutig erkannt werden, ob die Dichtlippe korrekt, das heißt in Richtung des abzudichtenden Raums vorgewölbt, montiert ist oder nicht.

### Kurzbeschreibung der Zeichnungen

Der Gegenstand der Erfindung wird nachfolgend durch die Zeichnungen weiter verdeutlicht.

Es zeigen:
- Fig.: 1: eine Dichtungsanordnung mit korrekt eingebautem Dichtring in geschnittener Darstellung,
- Fig. 2:: eine Ansicht der Dichtungsanordnung aus Fig. 1 von rechts, aus Richtung des abzudichtenden Raums,
- Fig. 3:: eine Dichtungsanordnung mit einem fehlerhaft eingebauten Dichtring, bei dem die Dichtlippe in Richtung der Umgebung vorgewölbt ist,
- Fig. 4:: eine Ansicht der Dichtungsanordnung aus Fig. 3 von rechts, aus Richtung des abzudichtenden Raums.

### Ausführung der Erfindung

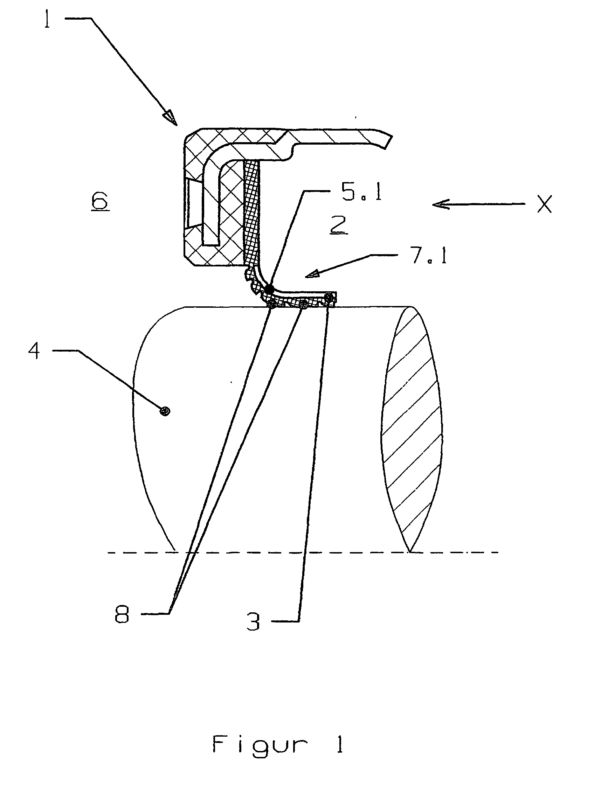

In Fig. 1 ist eine Dichtungsanordnung mit einem Dichtring 1 in korrekter Einbaulage gezeigt. Die Dichtlippe 3 des Dichtrings 1 ist in Richtung des abzudichtenden Raums 2 vorgewölbt und umschließt ein als Welle ausgebildetes Maschinenelement 4 umfangsseitig mit Vorspannung.

Auf der dem Maschinenelement 4 radial zugewandten Seite ist die Dichtlippe 3 mit einem Rückförderdrall 8 versehen, der bei einer Verdrehung des abzudichtenden Maschinenelements 4 relativ zur Dichtlippe 3 eine Rückförderung des abzudichtenden Mediums in Richtung des abzudichtenden Raums 2 bewirkt.

Auf der dem Maschinenelement 4 radial abgewandten Seite sind - in diesem Ausführungsbeispiel - acht gleichmäßig in Umfangsrichtung verteilte Ausnehmungen 5.1,....,5.8 vorgesehen, die axial in den abzudichtenden Raum 2 münden und sich in diesem Ausführungsbeispiel bis in den Bereich der Umlenkung von der axialen in die radiale Richtung erstrecken.

Davon abweichende Ausgestaltungen, bei denen sich beispielsweise die Ausnehmungen 5 nicht nur im wesentlichen in axialer Richtung sondern von der axialen in die radiale Richtung umlenkend und dann in radialer Richtung erstrecken, sind ebenfalls denkbar.

In der hier gezeigten, korrekten Einbaulage sind die Ausnehmungen 5.1,...5.8 ohne Funktion.

Bei einem statischen Luftdichtheitstest wird der abzudichtenden Raum 2 mit Druck beaufschlagt, der in diesem Ausführungsbeispiel durch den Rückförderdrall 8 nur sehr langsam in Richtung der Umgebung 6 entweicht, so daß dadurch die korrekte Montage des Dichtrings erkannt werden kann.

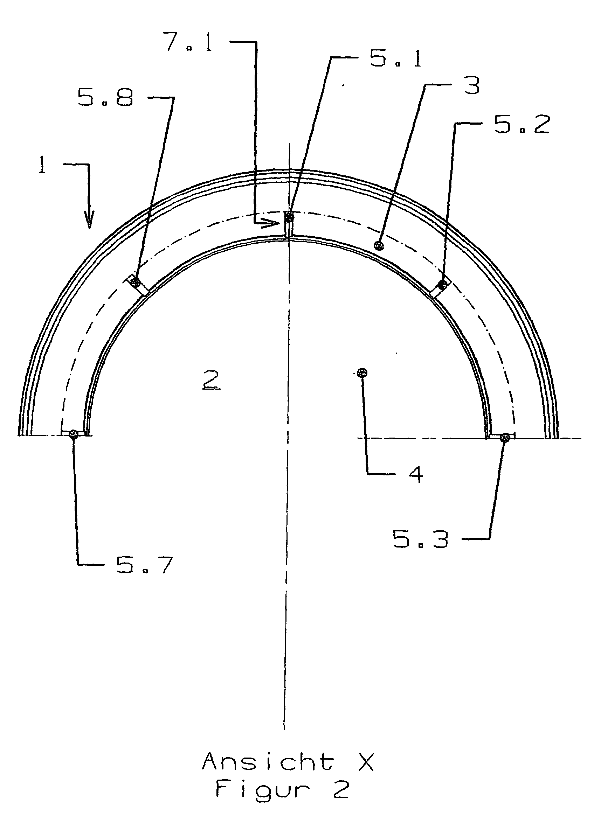

In Fig. 2 ist eine Ansicht der Dichtungsanordnung aus Fig. 1 von rechts gezeigt. Die Ausnehmungen 5.1,....5.8 erstrecken sich von der axialen Richtung in die radiale Richtung umlenkend, im wesentlichen geradlinig.

Die Dichtlippe 3 umschließt die Oberfläche des abzudichtenden Maschinenelements 4 im wesentlichen dichtend.

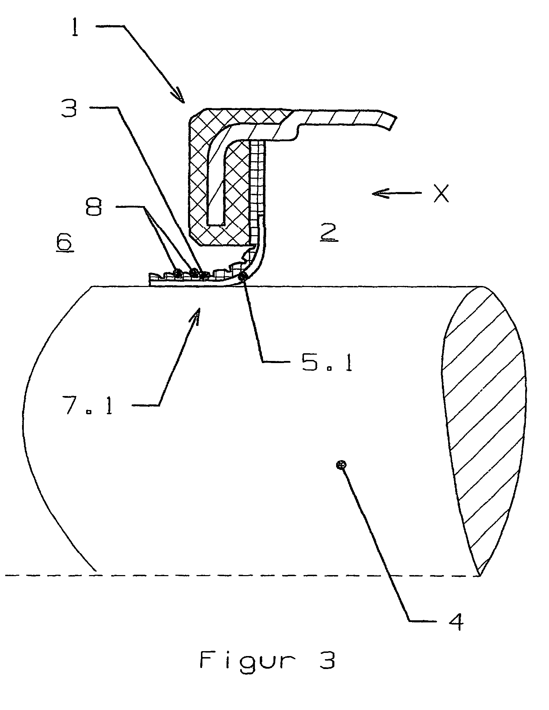

In Fig. 3 ist die Dichtungsanordnung aus Fig. 1 gezeigt, wobei die Dichtlippe 3 jedoch fehlerhaft in Richtung der Umgebung 6 vorgewölbt ist. Durch die fehlerhafte Montage des Dichtrings 1 werden der abzudichtende Raum 2 und die Umgebung 6 durch die Ausnehmungen 5.1,.....5.8 strömungsleitend verbunden. Beim statischen Luftdichtheitstest wird versucht, den abzudichtenden Raum 2 mit einem Überdruck zu beaufschlagen. In Abhängigkeit von der Ausgestaltung der Ausnehmungen 5 wird dies, wenn überhaupt, nur in beschränktem Maße gelingen. Der in den abzudichtenden Raum eingebrachte Überdruck wird durch die Ausnehmungen 5, die strömungsleitend mit der Umgebung 6 verbunden sind, sehr rasch abgebaut. Dieser Druckabfall ist ein sicheres Indiz dafür, daß die Dichtlippe 3 fehlerhaft in Richtung der Umgebung 6 vorgewölbt ist.

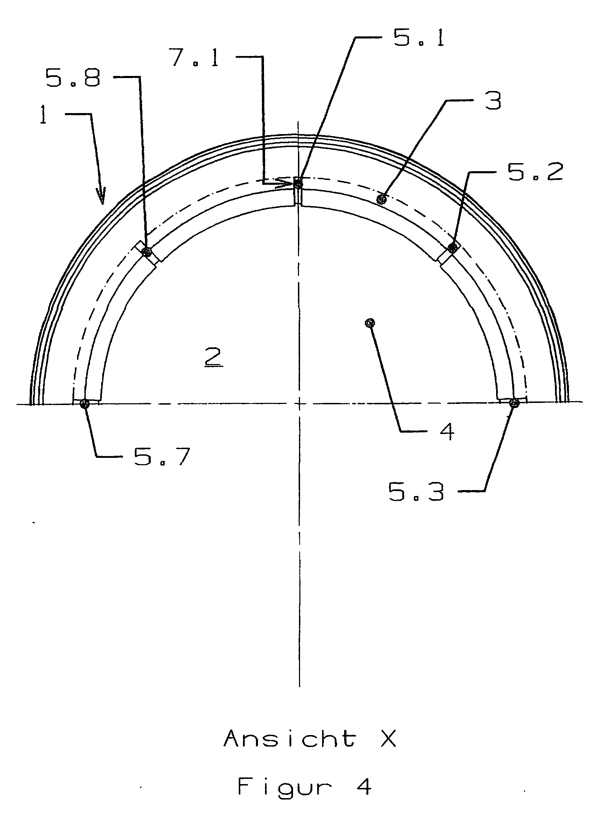

In Fig. 4 ist eine Ansicht der Dichtungsanordnung aus Fig. 3 von rechts gezeigt. Die Ausnehmungen 5.1,....5.8 erstrecken sich in radialer Richtung nach innen bis zur Oberfläche des abzudichtenden Maschinenelements 4 und bilden dadurch mit der abzudichtenden Oberfläche des Maschinenelements 4 jeweils einen Kanal 7.1...., 7.8, der den abzudichtenden Raum 2 mit der Umgebung 6 strömungsleitend verbindet.

## Patentansprüche

1. Dichtungsanordnung, umfassend einen Dichtring (1) mit im Einbauzustand einer in Richtung des abzudichtenden Raums (2) vorgewölbten Dichtlippe (3), die ein abzudichtendes Maschinenelement (4) umfangsseitig mit Vorspannung dichtend umschließt, wobei im Einbauzustand die Dichtlippe (3) auf der dem Maschinenelement (4) radial abgewandten Seite zumindest eine Ausnehmung (5) aufweist, **dadurch gekennzeichnet, dass** die Ausnehmung (5) nur bei fehlerhafter Montage des Dichtrings (1) und Vorwölbung der Dichtlippe (3) in Richtung der Umgebung (6), den abzudichtenden Raum (2) mit der Umgebung (6) strömungsleitend verbindet.

2. Dichtungsanordnung nach Anspruch 1, **dadurch gekennzeichnet, daß** die Ausnehmung (5) als leitungsförmiger Kanal (7) ausgebildet ist.

3. Dichtungsanordnung nach einem der Ansprüche 1 oder 2, **dadurch gekennzeichnet, daß** zumindest zwei Ausnehmungen (5.1, 5.2,...) gleichmäßig in Umfangsrichtung verteilt angeordnet sind.

4. Dichtungsanordnung nach einem der Ansprüche 1 bis 3, **dadurch gekennzeichnet, daß** die Dichtlippe (3) aus einem polymeren Werkstoff besteht.

5. Dichtungsanordnung nach Anspruch 4, **dadurch gekennzeichnet, daß** die Dichtlippe (3) aus PTFE besteht.

6. Dichtungsanordnung nach einem der Ansprüche 1 bis 5, **dadurch gekennzeichnet, daß** die Dichtlippe (3) im Einbauzustand auf der dem Maschinenelement (4) radial zugewandten Seite einen Rückförderdrall (8) für das abzudichtende Medium aufweist.

## Claims

1. Sealing arrangement, comprising a sealing ring (1) having, in the installed state, a sealing lip (3) which is precambered in the direction of the space (2) to be sealed off and encloses a machine element (4) to be sealed off on the circumferential side with prestress in a sealing manner, the sealing lip (3) having at least one recess (5), in the installed state, on that side which faces away from the machine element (4) radially, **characterized in that** the recess (5) connects the space (2) to be sealed off to atmosphere (6) in a manner which conducts flow only if the sealing ring (1) is installed incorrectly and the sealing lip (3) is precambered in the direction of atmosphere (6).

2. Sealing arrangement according to Claim 1, **characterized in that** the recess (5) is configured as a line-shaped duct (7).

3. Sealing arrangement according to either of Claims 1 and 2, **characterized in that** at least two recesses (5.1, 5.2,...) are distributed uniformly in the circumferential direction.

4. Sealing arrangement according to one of Claims 1 to 3, **characterized in that** the sealing lip (3) is composed of a polymeric material.

5. Sealing arrangement according to Claim 4, **characterized in that** the sealing lip (3) is composed of PTFE.

6. Sealing arrangement according to one of Claims 1 to 5, **characterized in that**, in the installed state, the sealing lip (3) has recirculating rifling (8) for the medium to be sealed off, on that side which faces the machine element (4) radially.

## Revendications

1. Dispositif d'étanchéité, comprenant une bague d'étanchéité (1) avec, à l'état monté, une lèvre d'étanchéité (3) précintrée en direction de l'espace à rendre étanche (2), qui entoure de façon étanche avec une précontrainte du côté du pourtour un élément de machine à rendre étanche (4), dans lequel, à l'état monté, la lèvre d'étanchéité (3) présente au moins un évidement (5) sur le côté situé radialement à l'opposé de l'élément de machine (4), **caractérisé en ce que** l'évidement (5) ne relie en relation d'écoulement l'espace à rendre étanche (2) avec l'ambiance (6) qu'en cas de montage défectueux de la bague d'étanchéité (1) et de précintrage de la lèvre d'étanchéité (3) en direction de l'ambiance (6).

2. Dispositif d'étanchéité selon la revendication 1, **caractérisé en ce que** l'évidement (5) est configuré en un canal (7) formant une conduite.

3. Dispositif d'étanchéité selon l'une quelconque des revendications 1 ou 2, **caractérisé en ce qu'**au moins deux évidements (5.1, 5.2, ...) sont disposés selon une distribution uniforme en direction périphérique.

4. Dispositif d'étanchéité selon l'une quelconque des revendications 1 à 3, **caractérisé en ce que** la lèvre d'étanchéité (3) est constituée d'un matériau polymère.

5. Dispositif d'étanchéité selon la revendication 4, **caractérisé en ce que** la lèvre d'étanchéité (3) est constituée de PTFE.

6. Dispositif d'étanchéité selon l'une quelconque des revendications 1 à 5, **caractérisé en ce que** la lèvre d'étanchéité (3) présente, à l'état monté, une rainure de retour (8) pour le fluide à arrêter, sur le côté situé radialement vers l'élément de machine (4).
